# EUROPEAN PATENT APPLICATION

(11) **EP 4 826 628 A1**
(43) Date of publication of application: **21.10.2026**
(21) Application number: 26164832.3
(22) Date of filing: 13.03.2026
(51) Int. Cl.: G06Q 30/0201, G06N 3/045, G06Q 30/0202, G06Q 50/06

(54) **MODELLING AND FORECASTING OF JOINT PRICE-VOLUME DISTRIBUTIONS OF INTRADAY CONTINUOUS POWER MARKETS**

(30) Priority: 17.04.2025 IN 202521037342
(71) Applicant: Tata Consultancy Services Limited, Maharashtra (IN)
(72) Inventor: THOKALA, Naveen Kumar, 500034 Hyderabad, Telangana (IN); SARANGAN, Venkatesh, 600113 Chennai, Tamil Nadu (IN); VELAYUDHAN KUMAR, Mohan Raj, 600113 Chennai, Tamil Nadu (IN)
(74) Representative: Goddar, Heinz J.

(57) **Abstract**

The disclosure relates generally to methods and systems for modelling and forecasting of joint price-volume distributions of intraday continuous power markets. Conventional techniques in forecasting the joint P-V behavior of intraday, continuous power markets (IDM) is focused solely on price, overlooking trading time. The methods and systems of the present disclosure propose a hierarchical approach for modeling the joint price-volume (P-V) distribution conditioned on the traded time. The first stage involves learning latent representations of the P-V distributions using a CNN autoencoder, while the second stage leverages these learnt latent representations, along with exogenous variables such as weather and calendar data, to train an LSTM model. The resultant LSTM model outputs are then decoded back to the original distributions using the CNN autoencoder. This advancement enables market participants to fine-tune their trading orders for optimized outcomes and more accurate risk management, profitable trading strategies, and better overall market operation.

## Description

### CROSS-REFERENCE TO RELATED APPLICATIONS AND PRIORITY

The present application claims priority from Indian provisional application no. 202521037342, filed on April 17, 2025.

### TECHNICAL FIELD

The disclosure herein generally relates to electricity markets, and, more particularly, to methods and systems for modelling and forecasting of joint price-volume distributions of intraday continuous power markets.

### BACKGROUND

Intraday electricity markets (IDM) facilitate continuous buying and selling of power (alternatively referred to as electricity, energy, and so on) after the closure of the day-ahead market (DAM) for the same and the following day. Each delivery hour in these IDM markets experiences thousands of transactions, resulting in a range of prices for distinct power volumes due to the pay-as-bid pricing model. Thus, modelling a joint price-volume (P-V) behavior is beneficial for power traders, energy companies, and consumers to design optimized buy and sell bids leading to more informed decision-making and improved risk mitigation.

Forecasting both price and volume together poses significant challenges due to the complex and dynamic interactions influenced by market regulations, volatility in renewable energy generation and consumer behavior. Conventional techniques in forecasting the joint price-volume (P-V) behavior of intraday, continuous power markets (IDM) are very limited. Some conventional forecasting techniques focused solely on price, overlooking trading time.

### SUMMARY

Embodiments of the present disclosure present technological improvements as solutions to one or more of the above-mentioned technical problems recognized by the inventors in conventional systems.

In an aspect, a processor-implemented method for modelling and forecasting of joint price-volume distributions of intraday continuous power markets is provided. The method comprising: receive a historical price-volume (P-V) transaction dataset associated with a predefined number of days, from a repository, wherein the historical price-volume (P-V) transaction dataset comprises a plurality of price-volume (P-V) transaction records, and wherein each of the plurality of price-volume (P-V) transaction records comprises an electricity price (P) and an electricity volume (V), at each trade time of one or more trade times for each delivery hour of one or more delivery hours in each day of the predefined number of days; transform the plurality of price-volume (P-V) transaction records present in the historical price-volume (P-V) transaction dataset, to obtain one or more multi-channel two-dimensional (2-D) histograms for each day of the predefined number of days, wherein each of the one or more multi-channel 2-D histograms is associated with each trade time of the one or more trade times for each delivery hour of the one or more delivery hours; train a convolutional neural network autoencoder (CNN autoencoder) and a Long short-term memory encoder-decoder (LSTM encoder-decoder) sequentially with the one or more multi-channel 2-D histograms for each day of the predefined number of days, for a predefined number of iterations, to obtain a trained CNN autoencoder and a trained LSTM encoder-decoder, respectively, wherein the CNN autoencoder comprises a first encoder and a first decoder, and the LSTM encoder-decoder comprises a second encoder and a second decoder; receive, (i) one or more input delivery hours for which a joint price-volume (P-V) is to be forecasted, (ii) one or more exogenous variables, and (iii) the historical price-volume (P-V) transaction dataset associated with one or more predefined delivery hours previous to the one or more input delivery hours; pass the one or more multi-channel 2-D histograms associated with each predefined delivery hour of the one or more predefined delivery hours, at a time, to the first encoder of the trained CNN autoencoder, to obtain a latent vector associated with each predefined delivery hour of the one or more predefined delivery hours; pass the latent vector associated with each predefined delivery hour of the one or more predefined delivery hours, to the trained LSTM encoder-decoder, to obtain a future-state latent vector associated with each of the one or more input delivery hours; pass the future-state latent vector associated with each of the one or more input delivery hours, to the first decoder of the trained CNN autoencoder, to obtain a reconstructed multi-channel 2-D histogram associated with each of the one or more input delivery hours; and forecast the joint price-volume (P-V) associated with each of the one or more input delivery hours, from the reconstructed multi-channel 2-D histogram associated with each of the one or more input delivery hours.

In another aspect, a system for modelling and forecasting of joint price-volume distributions of intraday continuous power markets is provided. The system includes: a memory storing instructions; one or more Input/Output (I/O) interfaces; and one or more hardware processors coupled to the memory via the one or more I/O interfaces, wherein the one or more hardware processors are configured by the instructions to: receiving a historical price-volume (P-V) transaction dataset associated with a predefined number of days, from a repository, wherein the historical price-volume (P-V) transaction dataset comprises a plurality of price-volume (P-V) transaction records, and wherein each of the plurality of price-volume (P-V) transaction records comprises an electricity price (P) and an electricity volume (V), at each trade time of one or more trade times for each delivery hour of one or more delivery hours in each day of the predefined number of days; transforming the plurality of price-volume (P-V) transaction records present in the historical price-volume (P-V) transaction dataset, to obtain one or more multi-channel two-dimensional (2-D) histograms for each day of the predefined number of days, wherein each of the one or more multi-channel 2-D histograms is associated with each trade time of the one or more trade times for each delivery hour of the one or more delivery hours; training a convolutional neural network (CNN) autoencoder and a Long short-term memory (LSTM) encoder-decoder sequentially with the one or more multi-channel 2-D histograms for each day of the predefined number of days, for a predefined number of iterations, to obtain a trained CNN autoencoder and a trained LSTM encoder-decoder, respectively, wherein the CNN autoencoder comprises a first encoder and a first decoder, and the LSTM encoder-decoder comprises a second encoder and a second decoder; receiving, (i) one or more input delivery hours for which a joint price-volume (P-V) is to be forecasted, (ii) one or more exogenous variables, and (iii) the historical price-volume (P-V) transaction dataset associated with one or more predefined delivery hours previous to the one or more input delivery hours; passing the one or more multi-channel 2-D histograms associated with each predefined delivery hour of the one or more predefined delivery hours, at a time, to the first encoder of the trained CNN autoencoder, to obtain a latent vector associated with each predefined delivery hour of the one or more predefined delivery hours; passing the latent vector associated with each predefined delivery hour of the one or more predefined delivery hours, to the trained LSTM encoder-decoder, to obtain a future-state latent vector associated with each of the one or more input delivery hours; passing the future-state latent vector associated with each of the one or more input delivery hours, to the first decoder of the trained CNN autoencoder, to obtain a reconstructed multi-channel 2-D histogram associated with each of the one or more input delivery hours; and forecasting the joint price-volume (P-V) associated with each of the one or more input delivery hours, from the reconstructed multi-channel 2-D histogram associated with each of the one or more input delivery hours.

In yet another aspect, there are provided one or more non-transitory machine-readable information storage mediums comprising one or more instructions which when executed by one or more hardware processors cause: receiving a historical price-volume (P-V) transaction dataset associated with a predefined number of days, from a repository, wherein the historical price-volume (P-V) transaction dataset comprises a plurality of price-volume (P-V) transaction records, and wherein each of the plurality of price-volume (P-V) transaction records comprises an electricity price (P) and an electricity volume (V), at each trade time of one or more trade times for each delivery hour of one or more delivery hours in each day of the predefined number of days; transforming the plurality of price-volume (P-V) transaction records present in the historical price-volume (P-V) transaction dataset, to obtain one or more multi-channel two-dimensional (2-D) histograms for each day of the predefined number of days, wherein each of the one or more multi-channel 2-D histograms is associated with each trade time of the one or more trade times for each delivery hour of the one or more delivery hours; training a convolutional neural network (CNN) autoencoder and a Long short-term memory (LSTM) encoder-decoder sequentially with the one or more multi-channel 2-D histograms for each day of the predefined number of days, for a predefined number of iterations, to obtain a trained CNN autoencoder and a trained LSTM encoder-decoder, respectively, wherein the CNN autoencoder comprises a first encoder and a first decoder, and the LSTM encoder-decoder comprises a second encoder and a second decoder; receiving, (i) one or more input delivery hours for which a joint price-volume (P-V) is to be forecasted, (ii) one or more exogenous variables, and (iii) the historical price-volume (P-V) transaction dataset associated with one or more predefined delivery hours previous to the one or more input delivery hours; passing the one or more multi-channel 2-D histograms associated with each predefined delivery hour of the one or more predefined delivery hours, at a time, to the first encoder of the trained CNN autoencoder, to obtain a latent vector associated with each predefined delivery hour of the one or more predefined delivery hours; passing the latent vector associated with each predefined delivery hour of the one or more predefined delivery hours, to the trained LSTM encoder-decoder, to obtain a future-state latent vector associated with each of the one or more input delivery hours; passing the future-state latent vector associated with each of the one or more input delivery hours, to the first decoder of the trained CNN autoencoder, to obtain a reconstructed multi-channel 2-D histogram associated with each of the one or more input delivery hours; and forecasting the joint price-volume (P-V) associated with each of the one or more input delivery hours, from the reconstructed multi-channel 2-D histogram associated with each of the one or more input delivery hours.

In an embodiment, each of the one or more multi-channel 2-D histograms comprises one or more price (P)-volume (V) bins, and wherein each of the one or more price (P)-volume (V) bins comprises a normalized frequency of one or more price-volume (P-V) transactions occurred at each trade time.

In an embodiment, training the CNN autoencoder to obtain the trained CNN autoencoder, comprises: (a) passing the one or more multi-channel 2-D histograms associated with each delivery hour at a time, of the one or more delivery hours, at each iteration of the predefined number of iterations, to the first encoder to obtain a latent vector associated with each of the one or more multi-channel 2-D histograms; (b) passing the latent vector associated with each of the one or more multi-channel 2-D histograms associated with each delivery hour, at a time, to the first decoder, to obtain a reconstructed multi-channel 2-D histogram associated with each of the one or more multi-channel 2-D histograms associated with each delivery hour; (c) calculating a value of a loss function of the CNN autoencoder using each of the one or more multi-channel 2-D histograms and the reconstructed multi-channel 2-D histogram associated with each of the one or more multi-channel 2-D histograms associated with each delivery hour, wherein the loss function is sum of a Kullback-Leibler (KL) divergence loss and a Mean Square Error (MSE) loss; (d) updating one or more weights of the CNN autoencoder based on the value of the loss function; and (e) repeating the steps (a) through (d) until the one or more multi-channel 2-D histograms associated with one or more delivery hours are completed for the predefined number of iterations, to obtain the trained CNN autoencoder.

In an embodiment, training the LSTM encoder-decoder to obtain the trained LSTM encoder-decoder, comprises: (a) passing (i) the latent vector of each of the one or more multi-channel 2-D histograms associated with each delivery hour, that are obtained from the first encoder of the CNN autoencoder, and (ii) one or more exogenous variables, at a time, at each iteration of the predefined number of iterations, to the second encoder, to obtain a fixed-sized one-dimensional hidden vector for each of the one or more multi-channel 2-D histograms associated with each delivery hour; (b) passing the fixed-sized one-dimensional hidden vector for each of the one or more multi-channel 2-D histograms associated with each delivery hour, and the one or more exogenous parameters, to the second decoder, to predict a future-state latent vector for each delivery hour; (c) calculating a value of a loss function of the LSTM encoder-decoder using the future-state latent vector and the latent vector, associated with each delivery hour, wherein the loss function is a Mean Square Error (MSE) loss; (d) updating one or more weights of the LSTM encoder-decoder based on the value of the loss function; and (e) repeating the steps (a) through (d) until the plurality of multi-channel 2-D histograms associated with one or more delivery hours are completed for the predefined number of iterations, to obtain the trained LSTM encoder-decoder.

In an embodiment, the one or more exogenous variables are received from the repository, and comprises one or more of: a delivery hour, a day of the week, a solar irradiance, a wind speed and temperature, and an average price signal of a delivery hour from cleared transactions happened beyond the one or more trade times considered.

It is to be understood that both the foregoing general description and the following detailed description are exemplary and explanatory only and are not restrictive of the invention, as claimed.

### BRIEF DESCRIPTION OF THE DRAWINGS

The accompanying drawings, which are incorporated in and constitute a part of this disclosure, illustrate exemplary embodiments and, together with the description, serve to explain the disclosed principles:
FIG. 1 is an exemplary block diagram of a system for modelling and forecasting of joint price-volume distributions of intraday continuous power markets, in accordance with some embodiments of the present disclosure.
FIGS. 2A and 2B illustrate exemplary flow diagrams of a processor-implemented method for modelling and forecasting of joint price-volume distributions of intraday continuous power markets, using the system of FIG. 1, in accordance with some embodiments of the present disclosure.
FIG. 3 shows an exemplary multi-channel 2-D histogram, in accordance with some embodiments of the present disclosure.
FIG. 4 shows an exemplary architecture of a convolutional neural network (CNN) autoencoder, in accordance with some embodiments of the present disclosure.
FIG. 5 is a flowchart showing the steps for training the CNN autoencoder to obtain the trained CNN autoencoder, in accordance with some embodiments of the present disclosure.
FIG. 6 shows an exemplary architecture of a Long short-term memory (LSTM) encoder-decoder, in accordance with some embodiments of the present disclosure.
FIG. 7 is a flowchart showing the steps for training the LSTM encoder-decoder to obtain the trained LSTM encoder-decoder, in accordance with some embodiments of the present disclosure.
FIG. 8 shows an exemplary representation of the trained CNN autoencoder and the trained LSTM encoder-decoder for forecasting joint price-volume (P-V) distribution, in accordance with some embodiments of the present disclosure.

### DETAILED DESCRIPTION OF EMBODIMENTS

Exemplary embodiments are described with reference to the accompanying drawings. In the figures, the left-most digit(s) of a reference number identifies the figure in which the reference number first appears. Wherever convenient, the same reference numbers are used throughout the drawings to refer to the same or like parts. While examples and features of disclosed principles are described herein, modifications, adaptations, and other implementations are possible without departing from the scope of the disclosed embodiments.

Integration of renewable energy sources such as solar, wind, geothermal, hydropower, biomass, and so on, into power systems introduces challenges in maintaining supply-demand balance due to their inherent volatility. Day-ahead forecasting of renewable generation is often inaccurate, limiting effective participation in day-ahead markets. Intraday electricity markets (IDM) mitigate uncertainties in generation and demand by enabling trading closer to the delivery hour, offering flexibility, and reducing reliance on reserves. The IDMs follow a pay-as-bid mechanism, open to orders post gate closure of the day-ahead market (DAM). For example, European Power Exchange (EPEX) IDM opens at 3 p.m., on day d - 1 for the next day d and allows continuous orders until 30 minutes before delivery (delivery hours).

Despite their advantages, the IDMs face challenges such as high volatility, price fluctuations, unpredictable supply, low liquidity, and so on. Thousands of transactions occur per delivery hour, influenced by bid volumes and trading times, complicating market modeling. Earlier works in this domain demonstrated that joint price-volume (P-V) distribution modeling is more effective for trading than price-only approaches for market participants.

IDM forecasting techniques are broadly categorized into: (i) a point forecasting, using Volume Weighted Average Price (VWAP) as the mean price for a delivery hour, and (ii) a probabilistic forecasting, that predict price distributions. Conventional techniques used LASSO regression for VWAP forecasting, employed Large Short-Term Memory (LSTMs) for day-ahead and intraday VWAP predictions in Denmark. Some conventional techniques demonstrated the efficacy of Gated Recurrent Unit (GRU) and LSTM based models for day-ahead price forecasting in Turkey, though these works focused primarily on VWAP.

For the probabilistic forecasting, Dense quantile-based price distribution forecasting was introduced for German IDMs. Time2Vec-Transformer models were employed for price distribution forecasting but omitted the trading time. Bayesian hierarchical models with Orthogonal Matching Pursuit (OMP) were proposed in dimensionality reduction. However, most of the probabilistic forecasting techniques focus solely on price, overlooking the trading time. Despite the advantage offered by the price-volume distributions in IDM trading, forecasting the joint price-volume (P-V) behavior of intraday, continuous power markets (IDM) are very limited.

The present disclosure solves the technical problems in the art with the methods and systems for modelling and forecasting of joint price-volume distributions of intraday continuous power markets. The methods and systems of the present disclosure propose a hierarchical approach for modeling the joint price-volume (P-V) distribution conditioned on the traded time. The first stage of the present disclosure involves learning latent representations of the price-volume (P-V) distributions using a convolutional neural network (CNN) autoencoder, while the second stage of the present disclosure leverages these learnt latent representations, along with exogenous variables such as weather and calendar data, to train an LSTM model. The resultant LSTM model outputs are then decoded back to the original distributions using the CNN autoencoder.

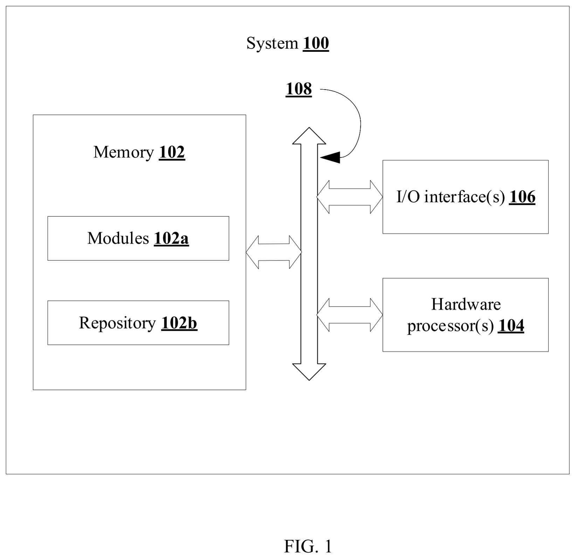

Referring now to the drawings, and more particularly to FIG. 1 through FIG. 8, where similar reference characters denote corresponding features consistently throughout the figures, there are shown preferred embodiments, and these embodiments are described in the context of the following exemplary systems and/or methods.

FIG. 1 is an exemplary block diagram of a system 100 for modelling and forecasting of joint price-volume distributions of intraday continuous power markets, in accordance with some embodiments of the present disclosure. In an embodiment, the system 100 includes or is otherwise in communication with one or more hardware processors 104, communication interface device(s) or input/output (I/O) interface(s) 106, and one or more data storage devices or memory 102 operatively coupled to the one or more hardware processors 104. The one or more hardware processors 104, the memory 102, and the I/O interface(s) 106 may be coupled to a system bus 108 or a similar mechanism.

The I/O interface(s) 106 may include a variety of software and hardware interfaces, for example, a web interface, a graphical user interface (GUI), and the like. The I/O interface(s) 106 may include a variety of software and hardware interfaces, for example, interfaces for peripheral device(s), such as a keyboard, a mouse, an external memory, a plurality of sensor devices, a printer and the like. Further, the I/O interface(s) 106 may enable the system 100 to communicate with other devices, such as web servers and external databases.

The I/O interface(s) 106 can facilitate multiple communications within a wide variety of networks and protocol types, including wired networks, for example, local area network (LAN), cable, etc., and wireless networks, such as Wireless LAN (WLAN), cellular, or satellite. For the purpose, the I/O interface(s) 106 may include one or more ports for connecting a number of computing systems with one another or to another server computer. Further, the I/O interface(s) 106 may include one or more ports for connecting a number of devices to one another or to another server.

The one or more hardware processors 104 may be implemented as one or more microprocessors, microcomputers, microcontrollers, digital signal processors, central processing units, state machines, logic circuitries, and/or any devices that manipulate signals based on operational instructions. Among other capabilities, the one or more hardware processors 104 are configured to fetch and execute computer-readable instructions stored in the memory 102. In the context of the present disclosure, the expressions 'processors' and 'hardware processors' may be used interchangeably. In an embodiment, the system 100 can be implemented in a variety of computing systems, such as laptop computers, portable computers, notebooks, hand-held devices, workstations, mainframe computers, servers, a network cloud and the like.

The memory 102 may include any computer-readable medium known in the art including, for example, volatile memory, such as static random access memory (SRAM) and dynamic random access memory (DRAM), and/or non-volatile memory, such as read only memory (ROM), erasable programmable ROM, flash memories, hard disks, optical disks, and magnetic tapes. In an embodiment, the memory 102 includes a plurality of modules 102a and a repository 102b for storing data processed, received, and generated by one or more of the plurality of modules 102a. The plurality of modules 102a may include routines, programs, objects, components, data structures, and so on, which perform particular tasks or implement particular abstract data types.

The plurality of modules 102a may include programs or computer-readable instructions or coded instructions that supplement applications or functions performed by the system 100. The plurality of modules 102a may also be used as, signal processor(s), state machine(s), logic circuitries, and/or any other device or component that manipulates signals based on operational instructions. Further, the plurality of modules 102a can be used by hardware, by computer-readable instructions executed by the one or more hardware processors 104, or by a combination thereof. In an embodiment, the plurality of modules 102a can include various sub-modules (not shown in FIG. 1). Further, the memory 102 may include information pertaining to input(s)/output(s) of each step performed by the processor(s) 104 of the system 100 and methods of the present disclosure.

The repository 102b may include a database or a data engine. Further, the repository 102b amongst other things, may serve as a database or includes a plurality of databases for storing the data that is processed, received, or generated as a result of the execution of the plurality of modules 102a. Although the repository 102b is shown internal to the system 100, it will be noted that, in alternate embodiments, the repository 102b can also be implemented external to the system 100, where the repository 102b may be stored within an external database (not shown in FIG. 1) communicatively coupled to the system 100. The data contained within such an external database may be periodically updated. For example, data may be added into the external database and/or existing data may be modified and/or non-useful data may be deleted from the external database. In one example, the data may be stored in an external system, such as a Lightweight Directory Access Protocol (LDAP) directory and a Relational Database Management System (RDBMS). In another embodiment, the data stored in the repository 102b may be distributed between the system 100 and the external database.

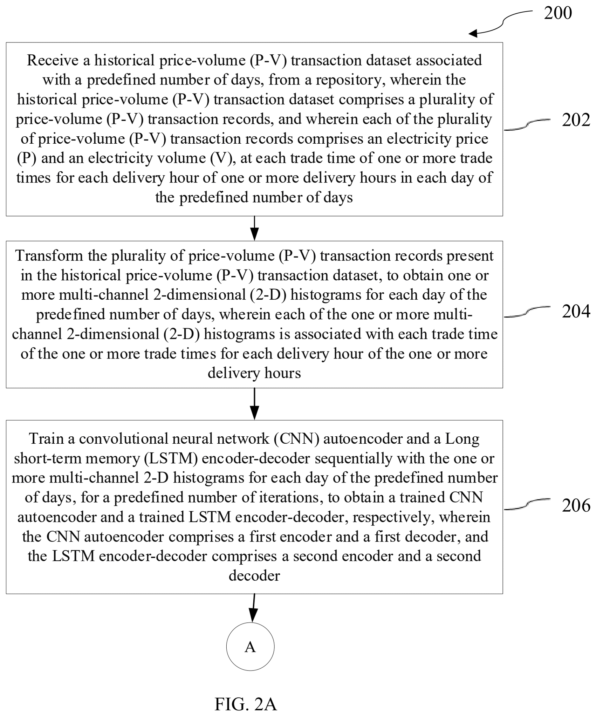

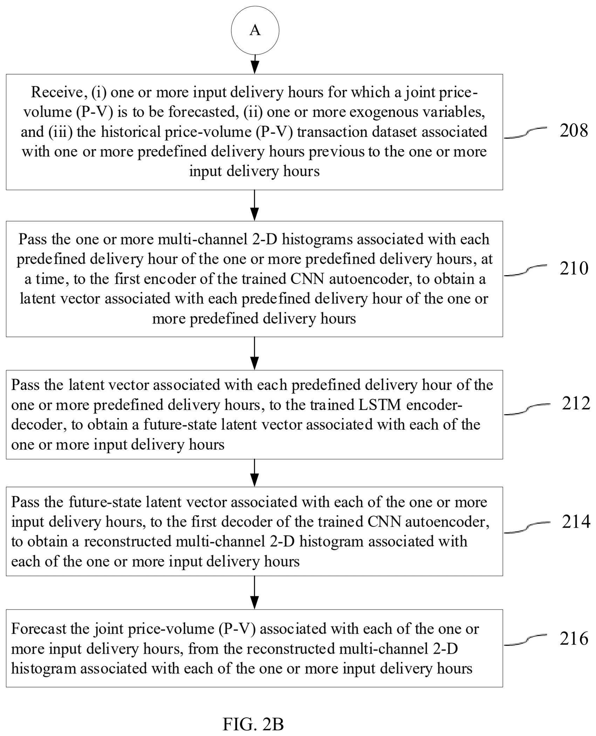

Referring to FIGS. 2A and 2B, components and functionalities of the system 100 are described in accordance with an example embodiment of the present disclosure. For example, FIGS. 2A and 2B illustrate exemplary flow diagrams of a processor-implemented method 200 for modelling and forecasting of joint price-volume distributions of intraday continuous power markets, using the system 100 of FIG. 1, in accordance with some embodiments of the present disclosure. Although steps of the method 200 including process steps, method steps, techniques or the like may be described in a sequential order, such processes, methods, and techniques may be configured to work in alternate orders. In other words, any sequence or order of steps that may be described does not necessarily indicate a requirement that the steps be performed in that order. The steps of processes described herein may be performed in any practical order. Further, some steps may be performed simultaneously, or some steps may be performed alone or independently.

At step 202 of the method 200, the one or more input/output (I/O) interfaces 106 of the system 100 are configured to receive a historical price-volume (P-V) transaction dataset associated with a predefined number of days, from a repository. The historical price-volume (P-V) transaction dataset is a temporal data, which includes a plurality of price-volume (P-V) transaction records associated with a predefined number of days, for example, 180 days (6 months). Each of the plurality of price-volume (P-V) transaction records include an electricity price (P) and an electricity volume (V), at each trade time of one or more trade times for each delivery hour of one or more delivery hours in each day of the predefined number of days.

In an embodiment, the trade time is defined as the time (time stamp) at which the trade or the transaction related to the electricity volume (V) at a given unit price (P) has happened. Thus, the one or more trade times are the times at which the transactions happened for each delivery hour. In an embodiment, the one or more trade times are defined for each hour of the day, for example, 1 hour, 2 hours, 3 hours..., 24 hours. In another embodiment, the one or more trade times are defined in ranges or intervals (trade time ranges) in the given day, for example, 0-2 hours, 2-4 hours, 4-6 hours, and so on.

In an embodiment, the delivery hour is defined as the hour (60 minutes duration) during which the electricity volume is to be available (delivered) for the consumption by the customer or the user who makes the transaction for the required electricity volume (V) at a given unit price (P). Thus, the one or more delivery hours are the delivery hours during which the electricity is delivered to the customer.

At step 204 of the method 200, the one or more hardware processors 104 of the system 100 are configured to transform the plurality of price-volume (P-V) transaction records present in the historical price-volume (P-V) transaction dataset received at step 202 of the method 200, to obtain one or more multi-channel two-dimensional (2-D) histograms for each day of the predefined number of days. Each of the one or more multi-channel 2-D histograms is associated with each trade time of the one or more trade times for each delivery hour of the one or more delivery hours.

The intraday market (IDM) involves a high volume of transactions for each delivery hour, with varying prices and volumes at different trading times. The objective is to forecast the joint price-volume (PV) distribution, conditioned on the traded time, for future delivery hours *k* (forecast horizon). The joint price-volume (P-V) distribution is generated by constructing a 2-D histogram, where price and volume are divided into fixed bins based on the overall price and volume ranges observed in the transactions cleared by the intraday market. Extreme tails are curtailed due to the insufficient number of transactions to reliably estimate probability values.

For example, consider different trade time ranges (e.g., 0-2 hours, 2-4 hours, 4-6 hours, ... and the like), the price-volume (P-V) transaction data can be converted into 2-D histogram which contains Price (P) and Volume (V) bins where each bin contains normalized frequency of transactions occurred at that corresponding trade time range (probabilities) which are called as joint price-volume (P-V) distribution. If the price range is divided into 64 equal-width bins spanning the interval € [0, 200], and the volume range is divided into 16 equal-width bins spanning [0, 150] MW, then as a result, each histogram has dimensions 16×64, with bins along the volume and price axes. Thus, each delivery hour transaction is represented as a n - channel 2-D histogram *Yₜ* ∈ *R* ^{*n*×16×64}, where these channels correspond to the trade time ranges (e.g., 0-2 hours, 2-4 hours, 4-6 hours, ... and the like).

In an embodiment, the problem statement of forecasting the joint price-volume (P-V) distribution of the present disclosure is formulated as in equation (1): ${\hat{Y}}_{\left(t+1\right) , … , \left(t+k\right)} = f \left({Y}_{t}, {Y}_{\left(t-1\right) , … , {e}_{t} , {e}_{t - 1} . .}\right)$ (1) Where *Yₜ* is the price-volume (P-V) distribution conditioned on traded time for delivery hour *t* and is defined as ${Y}_{t} ∈ {ℝ}^{C \times M \times N}$, where *C* denotes the number of channels representing different trading times, *M* and *N* represent the price and volume bins, respectively, *eₜ* represents the exogenoeus variables considered as co-variates. The objective is to predict the next sequence of multi-channel data *Ŷ*_{(*t+*1)}*, ... , Ŷ*_{(*t+k*)} for *k* future time steps.

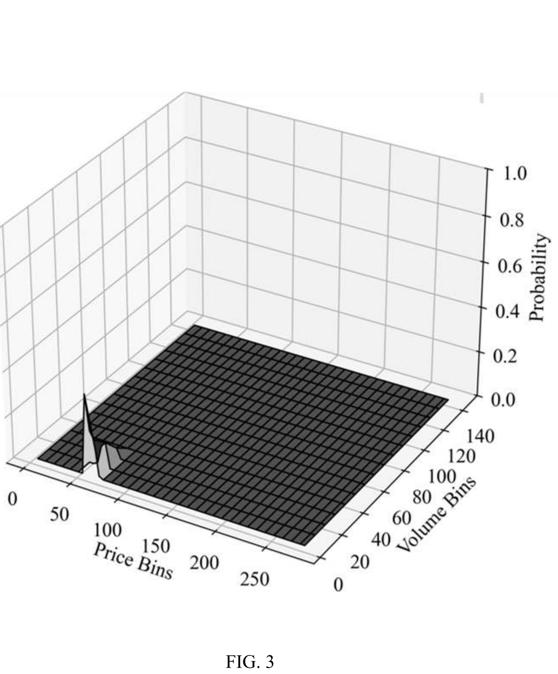

FIG. 3 shows an exemplary multi-channel 2-D histogram, in accordance with some embodiments of the present disclosure. As shown in FIG. 3, each of the one or more multi-channel 2-D histograms includes one or more price (P)-volume (V) bins. Each of the one or more price (P)-volume (V) bins includes a normalized frequency of one or more price-volume (P-V) transactions occurred at each trade time.

At step 206 of the method 200, the one or more hardware processors 104 of the system 100 are configured to train a convolutional neural network (CNN) autoencoder and a Long short-term memory (LSTM) encoder-decoder sequentially with the one or more multi-channel 2-D histograms obtained at step 204 of the method 200 for each day of the predefined number of days, for a predefined number of iterations, to obtain a trained CNN autoencoder and a trained LSTM encoder-decoder, respectively.

Modeling multi-dimensional distributions as a time series is complex, especially when the distributions do not follow any parametric form, as is the case with the intraday market's price-volume (P-V) distribution. Thus, the hierarchical approach of the CNN autoencoder and the LSTM encoder-decoder is employed in the present disclosure for forecasting joint price-volume (P-V) distributions. More specifically, the CNN autoencoder is trained first followed by the LSTM encoder-decoder in a hierarchical fashion.

The forecasting task is decomposed into two subproblems: (i) Learning latent representations ${z}_{t} ∈ {ℝ}^{n}$ of the input data *Yₜ* using the CNN autoencoder, and then (ii) the LSTM encoder-decoder is used to forecast the latent representations of the future time steps (delivery hours) *ẑ*_{(*t+*1)}, ... , *ẑ*_{(*t+k*)} as a function of past delivery hours latent representations *zₜ* along with exogenous variables ${e}_{t} ∈ {ℝ}^{d}$ (e.g., weather data, day of the week, hour of the day etc.,). The predicted latent representations are then decoded into raw price-volume (P-V) distributions *Ŷ*_{(*t+*1)}*,* ... , *Ŷ*_{(*t+k*)} for different trading times considered, by using the CNN autoencoder model.

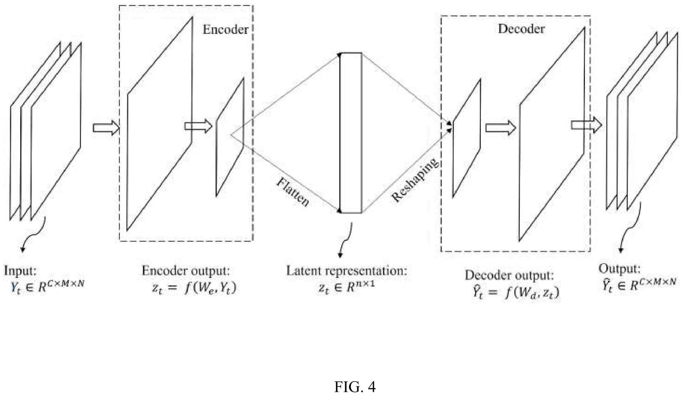

The CNN autoencoder is employed to extract compact representations of joint price-volume (P-V) distributions conditioned on trading time (multiple channels). The CNN autoencoder is effective in feature extraction, particularly with optimized hyperparameters, enabling the model to capture key patterns in price-volume interactions across different trading times. FIG. 4 shows an exemplary architecture of the CNN autoencoder, in accordance with some embodiments of the present disclosure. As shown in FIG. 4, the CNN autoencoder includes a first encoder (specified as encoder in FIG. 4) to extract the latent representations from the raw joint price-volume (P-V) distribution and a first decoder (specified as decoder in FIG. 4) to reconstruct back the input from the latent representations.

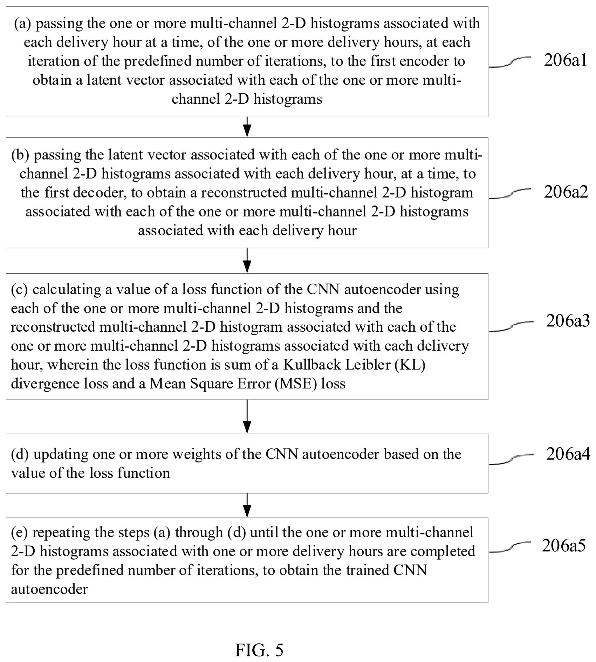

FIG. 5 is a flowchart showing the steps for training the CNN autoencoder to obtain the trained CNN autoencoder, in accordance with some embodiments of the present disclosure. As shown in FIG. 5, training the CNN autoencoder to obtain the trained CNN autoencoder is explained through steps 206a1 to 206a5, using the exemplary architecture of FIG. 4.

At step 206a1, the one or more multi-channel 2-D histograms associated with each delivery hour are passed at a time, of the one or more delivery hours, at each iteration of the predefined number of iterations, to the first encoder to obtain a latent vector associated with each of the one or more multi-channel 2-D histograms.

At step 206a2, the latent vector associated with each of the one or more multi-channel 2-D histograms associated with each delivery hour, at a time, is passed to the first decoder, to obtain a reconstructed multi-channel 2-D histogram associated with each of the one or more multi-channel 2-D histograms associated with each delivery hour.

The CNN autoencoder is designed to extract ${z}_{t} ∈ {ℝ}^{n}$ from the multi-channel input data *Yₜ.* The encoder function *f*(*W_{w}, Yₜ*) and the decoder function *f(W_{d}, zₜ*) are defined as: ${z}_{t} = f \left({W}_{e}, {Y}_{t}\right)$ (2) ${\hat{Y}}_{t} = f \left({W}_{d}, {z}_{t}\right)$ (3) Where *Wₑ* and *W_{d}* represent the trainable weights of the encoder and decoder, respectively.

At step 206a3, a value of a loss function of the CNN autoencoder is calculated using each of the one or more multi-channel 2-D histograms (actual histograms passed at step 206a1) and the reconstructed multi-channel 2-D histogram (obtained at step 206a2) associated with each of the one or more multi-channel 2-D histograms associated with each delivery hour. The loss function is the sum of a Kullback-Leibler (KL) divergence loss and a Mean Square Error (MSE) loss.

In an embodiment, the loss function of the CNN autoencoder is defined as in equation (4): ${L}_{CNN} = MSE \left({Y}_{t}, {\hat{Y}}_{t}\right) + λ KL \left({Y}_{t}\left‖{\hat{Y}}_{t}\right.\right)$ (4) where 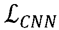 is the CNN loss function, *λ* is a weighting factor.

At step 206a4, one or more weights of the CNN autoencoder are updated based on the value of the loss function calculated at step 206a3. At step 206a5, the steps (206a1) through (206a4) are repeated until the one or more multi-channel 2-D histograms associated with one or more delivery hours are completed for the predefined number of iterations, to obtain the trained CNN autoencoder.

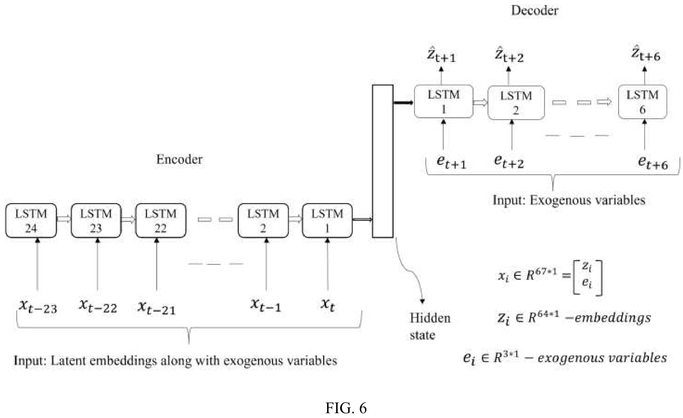

The LSTM encoder-decoder network is known for capturing temporal dependencies and hence is employed in the present disclosure to model the latent space representations. FIG. 6 shows an exemplary architecture of the LSTM encoder-decoder, in accordance with some embodiments of the present disclosure. As shown in FIG. 6, the LSTM encoder-decoder includes a second encoder (specified as encoder in FIG. 6) and a second decoder (specified as encoder in FIG. 6).

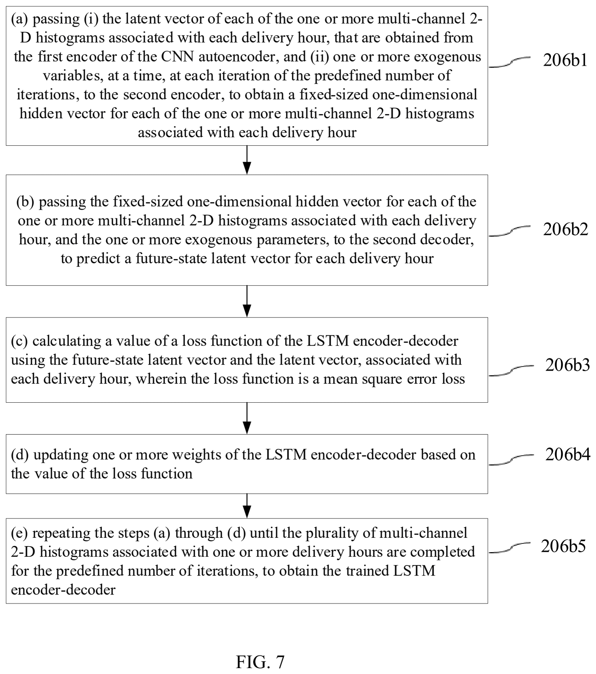

FIG. 7 is a flowchart showing the steps for training the LSTM encoder-decoder to obtain the trained LSTM encoder-decoder, in accordance with some embodiments of the present disclosure. As shown in FIG. 7, training the LSTM encoder-decoder to obtain the trained LSTM encoder-decoder is explained through steps 206b1 through 206b5, using the exemplary architecture of FIG. 6.

At step 206b1, (i) the latent vector of each of the one or more multi-channel 2-D histograms associated with each delivery hour, that are obtained from the first encoder of the CNN autoencoder, are passed at a time along with (ii) one or more exogenous variables, at each iteration of the predefined number of iterations, to the second encoder, to obtain a fixed-sized one-dimensional hidden vector for each of the one or more multi-channel 2-D histograms associated with each delivery hour.

The one or more exogenous variables are received from the repository. The one or more exogenous variables includes one or more of: a delivery hour, a day of the week, a solar irradiance, a wind speed and temperature, and an average price signal of a delivery hour from cleared transactions happened beyond the one or more trade times considered.

The second encoder of the LSTM encoder-decoder processes a sequence of past latent representations, *z*_{*t*-23}, ... , *zₜ* along with exogenous variables *e*_{*t-*23:}*ₜ.* The final hidden state *hₜ* serves as the context vector as expressed in equation (5): ${h}_{t} = {LSTM}_{enc} \left({z}_{t - 23 : t}, {e}_{t - 23 : t}\right)$ (5)

At step 206b2, the fixed-sized one-dimensional hidden vector for each of the one or more multi-channel 2-D histograms associated with each delivery hour, obtained at step 206b1, and the associated one or more exogenous parameters, are passed to the second decoder, to predict a future-state latent vector for each delivery hour. The second decoder uses *hₜ* as its initial state to predict the next *k* latent representations, *ẑ*_{(*t+*1)}*,* ... , *ẑ*_{(*t+k*)}*,* conditioned on *k* future exogenous variables: ${\hat{z}}_{t + i} = {LSTM}_{dec} \left({h}_{t + i - 1}, {e}_{t + i}\right) , ∀ i ∈ \left\{1,…,k\right\}$ (6)

At step 206b3, a value of the loss function of the LSTM encoder-decoder is calculated using the future-state latent vector obtained at step 206b2 and the latent vector (actual latent vector passed at step 206b1), associated with each delivery hour. The loss function of the LSTM encoder-decoder is the Mean Square Error (MSE) loss, which is defined as in equation (7): ${L}_{LSTM} = \frac{1}{P} {\sum }_{i = 1}^{P} MSE \left({\hat{z}}_{t + i}, {z}_{t + i}\right)$ (7) Wherein P refers to number of delivery hours.

At step 206b4, one or more weights of the LSTM encoder-decoder are updated based on the value of the loss function calculated at step 206b3. At step 206b5, the steps (206b1) through (206b4) are repeated until the plurality of multi-channel 2-D histograms associated with one or more delivery hours are completed for the predefined number of iterations, to obtain the trained LSTM encoder-decoder.

In an embodiment, the trained CNN autoencoder and the trained LSTM encoder-decoder are validated (tested) using some of the multi-channel 2-D histograms obtained at step 204 of the method 200 to determine the accuracy and the training process is continued until the desired accuracy of the trained CNN autoencoder, and the trained LSTM encoder-decoder is met. After the validation, the trained CNN autoencoder and the trained LSTM encoder-decoder are then used for inference in real-time for forecasting the intraday joint price-volume (P-V) distributions.

At step 208 of the method 200, the one or more hardware processors 104 of the system 100 are configured to receive, (i) one or more input delivery hours for which a joint price-volume (P-V) is to be forecasted, (ii) one or more exogenous variables, and (iii) the historical price-volume (P-V) transaction dataset associated with one or more predefined delivery hours previous to the one or more input delivery hours.

The one or more input delivery hours are the future hours for which the joint price-volume (P-V) is to be forecasted, for example, for the next 3 hours during which the electricity is to be delivered. The one or more exogenous variables are associated with the one or more input delivery hours based on the type of renewable energy sources. The one or more predefined delivery hours are the past delivered hours or the delivery hours during which the transaction are already carried out. Thus, the one or more predefined delivery hours are past data prior (previous) to the one or more input delivery hours for which the joint price-volume (P-V) is to be forecasted. In an embodiment, the one or more predefined delivery hours are the last 24 hours prior to the one or more input delivery hours.

At step 210 of the method 200, the one or more hardware processors 104 of the system 100 are configured to pass the one or more multi-channel 2-D histograms associated with each predefined delivery hour of the one or more predefined delivery hours, at a time, to the first encoder of the trained CNN autoencoder, to obtain a latent vector associated with each predefined delivery hour of the one or more predefined delivery hours. The one or more multi-channel 2-D histograms associated with each predefined delivery hour are obtained by transforming the associated price-volume (P-V) transaction records as explained at step 204 of the method 200.

At step 212 of the method 200, the one or more hardware processors 104 of the system 100 are configured to pass the latent vector associated with each predefined delivery hour of the one or more predefined delivery hours, to the trained LSTM encoder-decoder, to obtain a future-state latent vector associated with each of the one or more input delivery hours.

At step 214 of the method 200, the one or more hardware processors 104 of the system 100 are configured to pass the future-state latent vector associated with each of the one or more input delivery hours, to the first decoder of the trained CNN autoencoder, to obtain a reconstructed multi-channel 2-D histogram associated with each of the one or more input delivery hours.

At step 216 of the method 200, the one or more hardware processors 104 of the system 100 are configured to forecast the joint price-volume (P-V) associated with each of the one or more input delivery hours, from the reconstructed multi-channel 2-D histogram associated with each of the one or more input delivery hours.

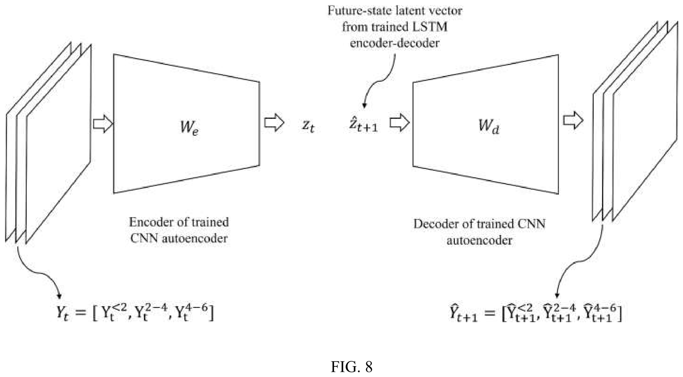

FIG. 8 shows an exemplary representation of the trained CNN autoencoder and the trained LSTM encoder-decoder for forecasting joint price-volume (P-V) distribution, in accordance with some embodiments of the present disclosure. As shown in FIG. 8, the first encoder of the trained CNN autoencoder learns the latent representations ${z}_{t} ∈ {ℝ}^{n}$ of the input data *Yₜ.* Then, the trained LSTM encoder-decoder is used to forecast the latent representations of the future time steps (delivery hours) *ẑ*_{(*t+*1)}, ... *, ẑ*_{(*t+k*)} as a function of past delivery hours latent representations *zₜ* along with exogenous variables ${e}_{t} ∈ {ℝ}^{d}$ (e.g., weather data, day of the week, hour of the day, etc.). The predicted latent representations are then decoded into raw price-volume (P-V) distributions *Ŷ*_{(*t+*1)}*,* ... , *Ŷ*_{(*t+k*)} for different trading times considered, by using the first decoder (*W_{d}*) of the trained CNN autoencoder, as expressed in equation (8): ${\hat{Y}}_{t + i} = f \left({W}_{d}, {\hat{z}}_{\left(t+i\right)}\right) , ∀ i ∈ \left\{1,…,k\right\}$ (8)

The methods and systems of the present disclosure effectively model and forecast the joint price-volume (P-V) distributions of intraday continuous power markets, for the required delivery hours conditioned on the trade time, based on the price-volume (P-V) distributions data of the past hours, for example, last 24 hours prior to the required delivery hours. The multi-channel histograms constructed for the price-volume (P-V) transaction data effectively model the multi-dimensional distributions time-series data.

### Example Scenario:

The methods and systems of the present disclosure were evaluated using first six months of 2019 French European Power Exchange (EPEX) intraday market dataset (https://developers.modoenergy.com/reference/epex-live-continuous-order-book). The transactions with trading times of less than 6 hours were considered as they account for approximately 85% of all trades for any given delivery hour. The transactions within six hours of the delivery hour t were divided into three channels, allowing for the creation of meaningful multi-channel 2-D histograms of joint price-volume (P-V) distributions. These channels are defined as follows:
- Channel 1: Trade time < 2 hours
- Channel 2: Trade time 2-4 hours
- Channel 3: Trade time 4-6 hours

For each trade time range, the multi-channel 2-D histograms were constructed to represent the joint distribution of trading price and volume. The price range was divided into 64 equal-width bins spanning the interval €[0, 200], and the volume range is divided into 16 equal-width bins spanning [0, 150] *MW.* As a result, each multi-channel 2-D histogram has dimensions 16×64, with bins along the volume and price axes. Each delivery hour transactions are represented as a 3-channel 2-D histogram ${Y}_{t} ∈ {ℝ}^{3 \times 16 \times 64}$, where the three channels correspond to the trade time ranges (< 2 hours, 2-4 hours, and 4-6 hours).

The value in each bin corresponds to the normalized frequency (or probability) of market cleared transactions occurring within the specific price and volume range for the respective trade time range. In addition to previous delivery hours price-volume (P-V) distributions' latent representations, exogenous variables ${e}_{t} ∈ {ℝ}^{8}$ that include weather features (e.g., temperature, wind speed), temporal features (e.g., hour of the day, day of the week), and day-ahead prices for the same delivery hour t were also considered as inputs to the LSTM encoder-decoder to capture their influence on electricity market dynamics.

The EPEX intraday market dataset was split into training 90% and testing 10% sets, after they were transformed into the 3-channel 2-D histograms. The test set covered unseen delivery hours and dates to assess generalization capability of the trained models. The framework of the present disclosure was implemented using PyTorch. The CNN autoencoder was trained on the training set with a learning rate of 1 × 10⁻³ using the Adam optimizer with a batch size of 16. The loss function combines the Mean Square Error (MSE) and the Kullback-Leibler (KL) divergence, as defined in equation (4) and λ was considered as 0.1.

The LSTM encoder-decoder was trained using the past 24 hours latent representations along with the 8 exogeneous variables to forecast the latent representations for the next 6 delivery hours. Adam optimizer, with a learning rate of 1 × 10⁻³ and the MSE loss function were used to train the LSTM encoder-decoder. ${L}_{LSTM} = \frac{1}{6} {\sum }_{i = 1}^{6} MSE \left({\hat{z}}_{t + i}, {z}_{t + i}\right)$ (9) Wherein, the batch size was set to 32, and the hidden state dimension of the LSTM encoder-decoder considered was 128.

Jensen-Shannon (JS) divergence was chosen as an evaluation metric for its symmetry, well-defined nature, and ability to quantify similarity between probability distributions. It evaluates how closely the model's forecast aligns with the actual price-volume (P-V) distribution. A persistence forecast (using the previous day's distribution for the same delivery hour) serves as a baseline to distinguish model performance from natural market variability. The JS divergence is a symmetrized and smoothed version of the KL divergence, as defined in equation (10): ${D}_{JS} \left(P\left‖Q\right.\right) = \frac{1}{2} {D}_{KL} \left(P\left‖M\right.\right) + \frac{1}{2} {D}_{KL} \left(Q\left‖M\right.\right)$ (10) where $M = \frac{1}{2} \left(P+Q\right)$ is the average of the two distributions. Unlike the *KL* divergence, the JS divergence is symmetric and bounded between 0 and 1, making it more robust for practical applications.

Table 1 shows the comparison results of the present disclosure over the persistence forecast baseline.

**Table 1**

| Forecast Technique | Channel 1 | Channel 2 | Channel 3 |
|---|---|---|---|
| Present disclosure | 0.2 | 0.13 | 0.27 |
| Persistence Forecast | 0.64 | 0.63 | 0.58 |

As shown in Table 1, the present disclosure significantly outperforms the baseline - the average reduction in the divergence across the three channels is more than 65%. This shows that there is significant variation in the trades happening across days which need to be modeled.

Further, the performance of the present disclosure was evaluated across different sets of exogenous variables to assess their impact on forecasting the joint price-volume (P-V) distribution.
• Set 1 (*X*₁): Hour of the day and day of the week.
• Set 2 (*X*₂): Set 1 and weather features (temperature, wind speed, etc.).
• Set 3 (*X*₃): Set 2 and day-ahead price.
• Set 4 (*X*₄): Set 3 and an average price of the transactions cleared by the intraday market in trade that happened up to 6 hours earlier than the delivery time.

**Table 2**

| Input Sets | Channel 1 | Channel 2 | Channel 3 |
|---|---|---|---|
| *X*₁ | 0.69 | 0.69 | 0.49 |
| *X*₂ | 0.61 | 0.43 | 0.25 |
| *X*₃ | 0.25 | 0.17 | 0.26 |
| *X*₄ | 0.2 | 0.13 | 0.27 |

Table 2 shows the results indicating the impact of exogenous variables on forecasting the joint price-volume (P-V) distribution. The results shown in table 2 are the average of the divergence values obtained across all the forecast horizons on the entire training dataset. From the results shown in Table 2, it can be inferred that:
- With an increasing number of exogenous features, forecasting accuracy improves across all channels. This indicates that each added feature has its own marginal utility.
- The forecast accuracy is highest on Channel 2 compared to Channels 1 and 3. Channel 1 contains transactions cleared close to delivery time, reflecting last-minute trading frenzies in intraday markets, which are harder to predict due to increased dynamics. Channel 3 includes transactions cleared well in advance, where traders often use test bids and offers to probe the market, adding to the complexity. Channel 2, however, better reflects the traders' true underlying strategies, making it more predictable.

Table 3 shows the results of the present disclosure across different look ahead time horizons. As shown in Table 3, the performance results are robust across the look ahead time horizons because the information flow is inherently captured through the hidden state in the architecture of the present disclosure.

**Table 3**

| Time Steps Ahead (hours) | Channel 1 | Channel 2 | Channel 3 |
|---|---|---|---|
| 1 | 0.191 | - | - |
| 2 | 0.183 | - | - |
| 3 | 0.175 | 0.123 | - |
| 4 | 0.177 | 0.125 | - |
| 5 | 0.188 | 0.132 | 0.24 |
| 6 | 0.196 | 0.13 | 0.267 |

Further, the performance of the proposed architecture of the present disclosure under a simpler recurrent network architecture, namely GRU (gated recurrent unit). This is to verify if the enhanced modeling flexibility introduced by the LSTM layer is worth the additional training overhead. Table 4 shows the performance results of the proposed architecture (LSTM model of the present disclosure) over the GRU. As shown in Table 4, the LSTM model indeed improves the forecasting accuracy over the GRU.

**Table 4**

| Model | Channel 1 | Channel 2 | Channel 3 |
|---|---|---|---|
| LSTM Model | 0.2 | 0.13 | 0.27 |
| GRU Model | 0.2 | 0.15 | 0.32 |

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

The embodiments of present disclosure herein address unresolved problems of modelling and forecasting of joint price-volume distributions of intraday continuous power markets, conditioned on the trade times. The methods and systems of the present disclosure achieved a robust performance, with an average JS divergence of 0.2, highlighting its effectiveness in accurately forecasting the joint price-volume (P-V) distribution. This advancement has significant implications for market participants, enabling them to fine-tune their trading orders for optimized outcomes and more accurate risk management, profitable trading strategies, and better overall market operation.

The joint price-volume (P-V) distribution modeling is more effective for trading than price-only approaches for market participants. Thus, the knowledge of the joint price-volume (P-V) distributions of cleared transactions in intra-day markets will help in designing improved future trading strategies. For example, for a given delivery hour of 6-7 PM, if there is an earlier trading time range of 1-2 PM with a higher revenue (volume times price) liquidity than the trading time range of 3-4 PM where a seller (who generates the electricity) usually places its offers, then the seller is better off advancing its offer placement (bids) to the earlier trading time range of 1-2 PM. Let's say the seller has 5 MW schedulable generation capacity and the expected price of the seller is 50 euros per MW. If the seller knows P-V distribution for future delivery hours, then the seller may put the offer (bid) in the delivery hour where the P-V distribution probability for 50 euros-5 MW combination is higher than the rest of the delivery hours.

Thus, accurate predictions resulting from the methods and systems of the present disclosure allow market participants such as sellers and buyers to anticipate price volatility and volume fluctuations, leading to more informed decision-making and improved risk mitigation.

It is to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g., any kind of computer like a server or a personal computer, or the like, or any combination thereof. The device may also include means which could be e.g., hardware means like e.g., an application-specific integrated circuit (ASIC), a field-programmable gate array (FPGA), or a combination of hardware and software means, e.g., an ASIC and an FPGA, or at least one microprocessor and at least one memory with software processing components located therein. Thus, the means can include both hardware means, and software means. The method embodiments described herein could be implemented in hardware and software. The device may also include software means. Alternatively, the embodiments may be implemented on different hardware devices, e.g., using a plurality of CPUs.

The embodiments herein can comprise hardware and software elements. The embodiments that are implemented in software include but are not limited to, firmware, resident software, microcode, etc. The functions performed by various components described herein may be implemented in other components or combinations of other components. For the purposes of this description, a computer-usable or computer readable medium can be any apparatus that can comprise, store, communicate, propagate, or transport the program for use by or in connection with the instruction execution system, apparatus, or device.

The illustrated steps are set out to explain the exemplary embodiments shown, and it should be anticipated that ongoing technological development will change the manner in which particular functions are performed. These examples are presented herein for purposes of illustration, and not limitation. Further, the boundaries of the functional building blocks have been arbitrarily defined herein for the convenience of the description. Alternative boundaries can be defined so long as the specified functions and relationships thereof are appropriately performed. Alternatives (including equivalents, extensions, variations, deviations, etc., of those described herein) will be apparent to persons skilled in the relevant art(s) based on the teachings contained herein. Such alternatives fall within the scope of the disclosed embodiments. Also, the words "comprising," "having," "containing," and "including," and other similar forms are intended to be equivalent in meaning and be open ended in that an item or items following any one of these words is not meant to be an exhaustive listing of such item or items or meant to be limited to only the listed item or items. It must also be noted that as used herein and in the appended claims, the singular forms "a," "an," and "the" include plural references unless the context clearly dictates otherwise.

Furthermore, one or more computer-readable storage media may be utilized in implementing embodiments consistent with the present disclosure. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., be non-transitory. Examples include random access memory (RAM), read-only memory (ROM), volatile memory, nonvolatile memory, hard drives, CD ROMs, DVDs, flash drives, disks, and any other known physical storage media.

It is intended that the disclosure and examples be considered as exemplary only, with a true scope of disclosed embodiments being indicated by the following claims.

## Claims

1. A processor-implemented method (200), comprising:
receiving, via one or more input/output (I/O) interfaces, a historical price-volume (P-V) transaction dataset associated with a predefined number of days from a repository, wherein the historical price-volume (P-V) transaction dataset comprises a plurality of price-volume (P-V) transaction records, and wherein each of the plurality of price-volume (P-V) transaction records comprises an electricity price (P) and an electricity volume (V), at each trade time of one or more trade times for each delivery hour of one or more delivery hours in each day of the predefined number of days (202);
transforming, via one or more hardware processors, the plurality of price-volume (P-V) transaction records present in the historical price-volume (P-V) transaction dataset, to obtain one or more multi-channel two-dimensional (2-D) histograms for each day of the predefined number of days, wherein each of the one or more multi-channel 2-D histograms is associated with each trade time of the one or more trade times for each delivery hour of the one or more delivery hours (204); and
training, via the one or more hardware processors, a CNN autoencoder and a LSTM encoder-decoder sequentially with the one or more multi-channel 2-D histograms for each day of the predefined number of days, for a predefined number of iterations, to obtain a trained CNN autoencoder and a trained LSTM encoder-decoder, respectively, wherein the CNN autoencoder comprises a first encoder and a first decoder, and the LSTM encoder-decoder comprises a second encoder and a second decoder (206).

2. The processor-implemented method (200) as claimed in claim 1, comprising:
receiving, via the one or more input/output (I/O) interfaces, (i) one or more input delivery hours for which a joint price-volume (P-V) is to be forecasted, (ii) one or more exogenous variables, and (iii) the historical price-volume (P-V) transaction dataset associated with one or more predefined delivery hours previous to the one or more input delivery hours (208);
passing, via the one or more hardware processors, the one or more multi-channel 2-D histograms associated with each predefined delivery hour of the one or more predefined delivery hours, at a time, to the first encoder of the trained CNN autoencoder, to obtain a latent vector associated with each predefined delivery hour of the one or more predefined delivery hours (210);
passing, via the one or more hardware processors, the latent vector associated with each predefined delivery hour of the one or more predefined delivery hours, to the trained LSTM encoder-decoder, to obtain a future-state latent vector associated with each of the one or more input delivery hours (212);
passing, via the one or more hardware processors, the future-state latent vector associated with each of the one or more input delivery hours, to the first decoder of the trained CNN autoencoder, to obtain a reconstructed multi-channel 2-D histogram associated with each of the one or more input delivery hours (214); and
forecasting, via the one or more hardware processors, the joint price-volume (P-V) associated with each of the one or more input delivery hours, from the reconstructed multi-channel 2-D histogram associated with each of the one or more input delivery hours (216).

3. The processor-implemented method (200) as claimed in claim 1, wherein each of the one or more multi-channel 2-D histograms comprises one or more price (P)-volume (V) bins, and wherein each of the one or more price (P)-volume (V) bins comprises a normalized frequency of one or more price-volume (P-V) transactions occurred at each trade time.

4. The processor-implemented method (200) as claimed in claim 1, wherein training the CNN autoencoder to obtain the trained CNN autoencoder, comprises:
(a) passing the one or more multi-channel 2-D histograms associated with each delivery hour at a time, of the one or more delivery hours, at each iteration of the predefined number of iterations, to the first encoder to obtain a latent vector associated with each of the one or more multi-channel 2-D histograms (206a1);
(b) passing the latent vector associated with each of the one or more multi-channel 2-D histograms associated with each delivery hour, at a time, to the first decoder, to obtain a reconstructed multi-channel 2-D histogram associated with each of the one or more multi-channel 2-D histograms associated with each delivery hour (206a2);
(c) calculating a value of a loss function of the CNN autoencoder using each of the one or more multi-channel 2-D histograms and the reconstructed multi-channel 2-D histogram associated with each of the one or more multi-channel 2-D histograms associated with each delivery hour, wherein the loss function is sum of a Kullback-Leibler (KL) divergence loss and a Mean Square Error(MSE) loss (206a3);
(d) updating one or more weights of the CNN autoencoder based on the value of the loss function (206a4); and
(e) repeating the steps (a) through (d) until the one or more multi-channel 2-D histograms associated with one or more delivery hours are completed for the predefined number of iterations, to obtain the trained CNN autoencoder (206a5).

5. The processor-implemented method (200) as claimed in claim 1, wherein training the LSTM encoder-decoder to obtain the trained LSTM encoder-decoder, comprises:
(a) passing (i) the latent vector of each of the one or more multi-channel 2-D histograms associated with each delivery hour, that are obtained from the first encoder of the CNN autoencoder, and (ii) one or more exogenous variables, at a time, at each iteration of the predefined number of iterations, to the second encoder, to obtain a fixed-sized one-dimensional hidden vector for each of the one or more multi-channel 2-D histograms associated with each delivery hour (206b1);
(b) passing the fixed-sized one-dimensional hidden vector for each of the one or more multi-channel 2-D histograms associated with each delivery hour, and the one or more exogenous parameters, to the second decoder, to predict a future-state latent vector for each delivery hour (206b2);
(c) calculating a value of a loss function of the LSTM encoder-decoder using the future-state latent vector and the latent vector, associated with each delivery hour, wherein the loss function is a Mean Square Error (MSE) loss (206b3);
(d) updating one or more weights of the LSTM encoder-decoder based on the value of the loss function (206b4); and
(e) repeating the steps (a) through (d) until the plurality of multi-channel 2-D histograms associated with one or more delivery hours are completed for the predefined number of iterations, to obtain the trained LSTM encoder-decoder (206b5).

6. The processor-implemented method (200) as claimed in claim 2, wherein the one or more exogenous variables are received from the repository, and comprises one or more of: a delivery hour, a day of the week, a solar irradiance, a wind speed and temperature, and an average price signal of a delivery hour from cleared transactions happened beyond the one or more trade times considered.

7. A system (100), comprising:
a memory (102) storing instructions;
one or more input/output (I/O) interfaces (106); and
one or more hardware processors (104) coupled to the memory (102) via the one or more I/O interfaces (106), wherein the one or more hardware processors (104) are configured by the instructions to:
receive via the one or more I/O interfaces (106), a historical price-volume (P-V) transaction dataset associated with a predefined number of days, from a repository, wherein the historical price-volume (P-V) transaction dataset comprises a plurality of price-volume (P-V) transaction records, and wherein each of the plurality of price-volume (P-V) transaction records comprises an electricity price (P) and an electricity volume (V), at each trade time of one or more trade times for each delivery hour of one or more delivery hours in each day of the predefined number of days;
transform the plurality of price-volume (P-V) transaction records present in the historical price-volume (P-V) transaction dataset, to obtain one or more multi-channel two-dimensional (2-D) histograms for each day of the predefined number of days, wherein each of the one or more multi-channel 2-D histograms is associated with each trade time of the one or more trade times for each delivery hour of the one or more delivery hours; and
train a convolutional neural network (CNN) autoencoder and a Long short-term memory (LSTM) encoder-decoder sequentially with the one or more multi-channel 2-D histograms for each day of the predefined number of days, for a predefined number of iterations, to obtain a trained CNN autoencoder and a trained LSTM encoder-decoder, respectively, wherein the CNN autoencoder comprises a first encoder and a first decoder, and the LSTM encoder-decoder comprises a second encoder and a second decoder.

8. The system (100) as claimed in claim 7, wherein the one or more hardware processors (104) are configured by the instructions to:
receive, (i) one or more input delivery hours for which a joint price-volume (P-V) is to be forecasted, (ii) one or more exogenous variables, and (iii) the historical price-volume (P-V) transaction dataset associated with one or more predefined delivery hours previous to the one or more input delivery hours;
pass the one or more multi-channel 2-D histograms associated with each predefined delivery hour of the one or more predefined delivery hours, at a time, to the first encoder of the trained CNN autoencoder, to obtain a latent vector associated with each predefined delivery hour of the one or more predefined delivery hours;
pass the latent vector associated with each predefined delivery hour of the one or more predefined delivery hours, to the trained LSTM encoder-decoder, to obtain a future-state latent vector associated with each of the one or more input delivery hours;
pass the future-state latent vector associated with each of the one or more input delivery hours, to the first decoder of the trained CNN autoencoder, to obtain a reconstructed multi-channel 2-D histogram associated with each of the one or more input delivery hours; and
forecast the joint price-volume (P-V) associated with each of the one or more input delivery hours, from the reconstructed multi-channel 2-D histogram associated with each of the one or more input delivery hours.

9. The system (100) as claimed in claim 7, wherein each of the one or more multi-channel 2-D histograms comprises one or more price (P)-volume (V) bins, and wherein each of the one or more price (P)-volume (V) bins comprises a normalized frequency of one or more price-volume (P-V) transactions occurred at each trade time.

10. The system (100) as claimed in claim 7, wherein the one or more hardware processors (104) are configured to train the CNN autoencoder to obtain the trained CNN autoencoder, by:
(a) passing the one or more multi-channel 2-D histograms associated with each delivery hour at a time, of the one or more delivery hours, at each iteration of the predefined number of iterations, to the first encoder to obtain a latent vector associated with each of the one or more multi-channel 2-D histograms;
(b) passing the latent vector associated with each of the one or more multi-channel 2-D histograms associated with each delivery hour, at a time, to the first decoder, to obtain a reconstructed multi-channel 2-D histogram associated with each of the one or more multi-channel 2-D histograms associated with each delivery hour;
(c) calculating a value of a loss function of the CNN autoencoder using each of the one or more multi-channel 2-D histograms and the reconstructed multi-channel 2-D histogram associated with each of the one or more multi-channel 2-D histograms associated with each delivery hour, wherein the loss function is sum of a Kullback-Leibler (KL) divergence loss and a Mean Square Error (MSE) loss;
(d) updating one or more weights of the CNN autoencoder based on the value of the loss function; and
(e) repeating the steps (a) through (d) until the one or more multi-channel 2-D histograms associated with one or more delivery hours are completed for the predefined number of iterations, to obtain the trained CNN autoencoder.

11. The system (100) as claimed in claim 7, wherein the one or more hardware processors (104) are configured to train the LSTM encoder-decoder to obtain the trained LSTM encoder-decoder, by:
(a) passing (i) the latent vector of each of the one or more multi-channel 2-D histograms associated with each delivery hour, that are obtained from the first encoder of the CNN autoencoder, and (ii) one or more exogenous variables, at a time, at each iteration of the predefined number of iterations, to the second encoder, to obtain a fixed-sized one-dimensional hidden vector for each of the one or more multi-channel 2-D histograms associated with each delivery hour;
(b) passing the fixed-sized one-dimensional hidden vector for each of the one or more multi-channel 2-D histograms associated with each delivery hour, and the one or more exogenous parameters, to the second decoder, to predict a future-state latent vector for each delivery hour;
(c) calculating a value of a loss function of the LSTM encoder-decoder using the future-state latent vector and the latent vector, associated with each delivery hour, wherein the loss function is a Mean Square Error (MSE) loss;
(d) updating one or more weights of the LSTM encoder-decoder based on the value of the loss function; and
(e) repeating the steps (a) through (d) until the plurality of multi-channel 2-D histograms associated with one or more delivery hours are completed for the predefined number of iterations, to obtain the trained LSTM encoder-decoder.

12. The system (100) as claimed in claim 8, wherein the one or more exogenous variables are received from the repository, and comprises one or more of: a delivery hour, a day of the week, a solar irradiance, a wind speed and temperature, and an average price signal of a delivery hour from cleared transactions happened beyond the one or more trade times considered.

13. One or more non-transitory machine-readable information storage mediums comprising one or more instructions which when executed by one or more hardware processors cause:
receiving, via one or more input/output (I/O) interfaces, a historical price-volume (P-V) transaction dataset associated with a predefined number of days from a repository, wherein the historical price-volume (P-V) transaction dataset comprises a plurality of price-volume (P-V) transaction records, and wherein each of the plurality of price-volume (P-V) transaction records comprises an electricity price (P) and an electricity volume (V), at each trade time of one or more trade times for each delivery hour of one or more delivery hours in each day of the predefined number of days;
transforming the plurality of price-volume (P-V) transaction records present in the historical price-volume (P-V) transaction dataset, to obtain one or more multi-channel two-dimensional (2-D) histograms for each day of the predefined number of days, wherein each of the one or more multi-channel 2-D histograms is associated with each trade time of the one or more trade times for each delivery hour of the one or more delivery hours; and
training a CNN autoencoder and a LSTM encoder-decoder sequentially with the one or more multi-channel 2-D histograms for each day of the predefined number of days, for a predefined number of iterations, to obtain a trained CNN autoencoder and a trained LSTM encoder-decoder, respectively, wherein the CNN autoencoder comprises a first encoder and a first decoder, and the LSTM encoder-decoder comprises a second encoder and a second decoder.

14. The one or more non-transitory machine readable information storage mediums as claimed in claim 13, wherein the one or more instructions which when executed by the one or more hardware processors further cause:
receiving, via the one or more input/output (I/O) interfaces, (i) one or more input delivery hours for which a joint price-volume (P-V) is to be forecasted, (ii) one or more exogenous variables, and (iii) the historical price-volume (P-V) transaction dataset associated with one or more predefined delivery hours previous to the one or more input delivery hours;
passing the one or more multi-channel 2-D histograms associated with each predefined delivery hour of the one or more predefined delivery hours, at a time, to the first encoder of the trained CNN autoencoder, to obtain a latent vector associated with each predefined delivery hour of the one or more predefined delivery hours;
passing the latent vector associated with each predefined delivery hour of the one or more predefined delivery hours, to the trained LSTM encoder-decoder, to obtain a future-state latent vector associated with each of the one or more input delivery hours;
passing the future-state latent vector associated with each of the one or more input delivery hours, to the first decoder of the trained CNN autoencoder, to obtain a reconstructed multi-channel 2-D histogram associated with each of the one or more input delivery hours; and
forecasting the joint price-volume (P-V) associated with each of the one or more input delivery hours, from the reconstructed multi-channel 2-D histogram associated with each of the one or more input delivery hours.

15. The one or more non-transitory machine readable information storage mediums as claimed in claim 13, wherein each of the one or more multi-channel 2-D histograms comprises one or more price (P)-volume (V) bins, and wherein each of the one or more price (P)-volume (V) bins comprises a normalized frequency of one or more price-volume (P-V) transactions occurred at each trade time.
